# EUROPEAN PATENT SPECIFICATION

(11) **EP 2 665 659 B1**
(45) Date of publication and mention of the grant of the patent: **19.10.2016**
(21) Application number: 12704713.2
(22) Date of filing: 17.01.2012
(51) Int. Cl.: B65D 55/14, B60K 15/04

(54) **LOCKING CLOSURE FOR AN OIL STORAGE TANK**
VERSCHLUSS FÜR EINEN ÖLSPEICHERTANK
ORGANE DE FERMETURE À VERROUILLAGE POUR CUVE DE STOCKAGE DE PÉTROLE

(30) Priority: 19.01.2011 GB 201100908
(43) Date of publication of application: 27.11.2013
(73) Proprietor: Wade, Stephen, Londonderry BT48 8SE (GB)
(72) Inventor: Wade, Stephen, Londonderry BT48 8SE (GB)
(74) Representative: Waller, Stephen
(86) International application number: PCT/EP2012/050644
(87) International publication number: WO 2012/098118

(56) References cited:
- EP-A2- 1 935 701
- WO-A1-89/07076
- WO-A1-2010/013077
- DE-U1- 20 211 093
- FR-A5- 2 086 807
- KR-B1- 100 774 612
- US-A- 1 649 587
- US-A- 3 900 220
- US-A1- 2008 022 732

## Description

This invention relates to a locking closure for securely closing the filler opening of an oil storage tank.

With ever increasing oil prices, the value of fuel oil stored in fuel tanks, particularly adjacent to a building to supply a heating system, is substantial, making the oil a target for thieves. A typical oil tank for a domestic central heating system can contain around £1200 of oil at present prices.

Heating oil tanks are traditionally made from moulded plastic and have a raised tubular filler neck defining a filler opening which is usually closed by a simple cap that fits over the opening. The filler neck may be provided with a male thread onto which the cap may be screwed. Previous commercially available solutions to locking the cap to the filler opening have typically involved passing a bar or rod through aligned holes in both the cap and the filler neck and fixing the bar or rod in place by passing a padlock through an end of the bar. GB 2 4667 427 discloses an example of such a known locking device for an oil tank wherein a pin is inserted through a cap and a filler neck to secure the cap to thereto, a padlock being inserted through an aperture in the end of the pin to prevent removal of the pin. This requires the assembly of a number of separate parts, each of which may be prone to damage or attack, and requires the use of a padlock in an exposed location wherein the padlock mechanism may become seized or corroded over time, particularly where access to the filler opening may not be required for two or three months at a time.

US 2008/0022732 A1 discloses a locking closure according to the preamble of claim 1.

According to the present invention there is provided a locking closure according to claim 1 for closing the filler opening of an oil storage tank. Said locking closure comprises an outer part defining a fitting boss securable to a filler opening of an oil storage tank and an inner part insertable into the fitting boss in the manner of a plug to close the filler opening, the inner part having a locking mechanism operable to secure the inner part in the fitting boss. The inner part thus comprises a filler cap for closing the filling opening of the tank.

The fitting boss of the locking closure comprises an outer sleeve adapted to be fitted over the filler opening of the oil tank.

In one embodiment, the outer sleeve may be provided with an internal thread adapted to engage a cooperating external thread on the filler opening.

The fitting boss further comprises a coaxial inner sleeve adapted to be inserted into the filler opening of the oil tank, said inner part of the locking closure being received within said inner sleeve of the fitting boss, said inner sleeve being adapted to retain the fitting boss to the filler opening, wherein an outer surface of the inner sleeve with provided with at least one outwardly projecting shoulder or flange adjacent a lower edge thereof to engage a lower end of the filler opening for resisting removal of the inner sleeve from the filler opening, the inner sleeve being provided with one or more axially extending slots or openings to permit the inner sleeve to be displaced inwardly to allow said shoulder or flange to pass through the filler opening of the tank.

An adaptor may be provided, the adaptor comprising a tubular sleeve adapted to be securable to the filler opening, said locking closure being securable to the adaptor, wherein the adaptor is receivable within the filler neck of the tank, the fitting boss being securable to the adaptor such that the adaptor defines a sleeve or spacer between the filler neck and the fitting boss, the adaptor being adapted to be retained within the filler opening when located therein.

Preferably the locking mechanism comprises one or more projections or lugs provided on at the inner part of the closure member, said one or more projections or lugs being moveable between a first position, wherein the inner part is free to be moved into and out of the fitting boss, and a second position, wherein said one or more projections or lugs engage cooperating features of the fitting boss to prevent removal of the inner part from the fitting boss. Said one or more projections or lugs may be moveable between their first and second positions by rotation of a lock barrel mounted in the inner part of the locking closure, said lock barrel being rotatable by means of a key. Said one or more projections or lugs may be provided on a first component of the inner part, said first component being coupled to a second component of the inner part for relative rotation with respect to the second component, such that rotation of the first component with respect to the second component moves said one or more projections or lugs between their first and second positions.

Said first component of the inner part preferably engages the fitting boss of the locking closure when the inner part is inserted into the fitting boss to prevent rotation of said first component of the inner part with respect to the fitting boss, said one or more projections or lugs of the second component of the inner part moving into and out of engagement with cooperating projections, recesses or lugs of the fitting boss as the second component of the inner part is rotated with respect to the first component.

Said one or more projections or lugs on the first component of the inner part may comprise at least one radially extending lip arranged to be received behind or below a respective inwardly extending projection or ledge on the fitting boss to retain the inner part within the fitting boss when said at least one radially extending lip of the first component is in its second position, said at least one radially extending lip being circumferentially spaced from said respective inwardly extending projection or ledge when in its first position to permit the inner part to be removed from the fitting boss.

An embodiment of the present invention will now be described, by way of example only, with reference to the accompanying drawings, in which:-
Figure 1 is a perspective view of an oil storage tank fitted with an example of a locking closure;
Figure 2 is a sectional view through locking closure of Figure 1;
Figure 3 is an exploded view of the locking closure of Figure 1 with the cap removed;
Figure 4 is a plan view of the locking closure of Figure 1;
Figure 5 is a sectional view on line C-C of Figure 4;
Figure 6 is a view from below of the locking closure of Figure 1 in a locked configuration;
Figure 7 is a sectional view on line D-D of Figure 6;
Figure 8 is a view from below of the locking closure of Figure 1 in an unlocked configuration;
Figure 9 is a sectional view on line E-E of Figure 8;
Figure 10 is a sectional view of the locking closure of Figure 1 with the cap removed;
Figure 11 is a plan view of a locking closure for an oil storage tank in accordance with a preferred embodiment of the present invention;
Figure 12 is a sectional view on line A-A of Figure 11;
Figure 13 is an exploded view of the locking closure of Figure 11;
Figure 14 is a side view of the locking closure of Figure 11 with the cap removed;
Figure 15 is a side view of the locking closure of Figure 11 with the cap inserted but not locked;
Figure 16 is a perspective view of the locking closure of Figure 11;
Figure 17 is a view from below of the locking closure of Figure 11 in an unlocked configuration;
Figure 18 is a view from below of the locking closure of Figure 11 in a locked configuration;
Figure 19 is a perspective view from below of the locking closure of Figure 11 in said locked configuration;
Figure 20 is a perspective view from below of the locking closure of Figure 11 showing removal of the electronic components from the cap;
Figures 21 and 22 are respective plan and sectional view of the locking closure of Figure 11 fitted to the filler neck of an oil tank;
Figures 22 and 23 are respective plan and sectional view of the locking closure of Figure 11 fitted to the filler neck of an oil tank having a wider neck, an adaptor being used to secure the locking closure to the filler neck;
Figures 24 and 25 are respective plan and sectional view of the locking closure of Figure 11 fitted to the filler neck of an oil tank having a thicker and wider filler neck utilising said adaptor; and
Figure 26 is a perspective view of the adaptor shown in Figures 23 and 25.

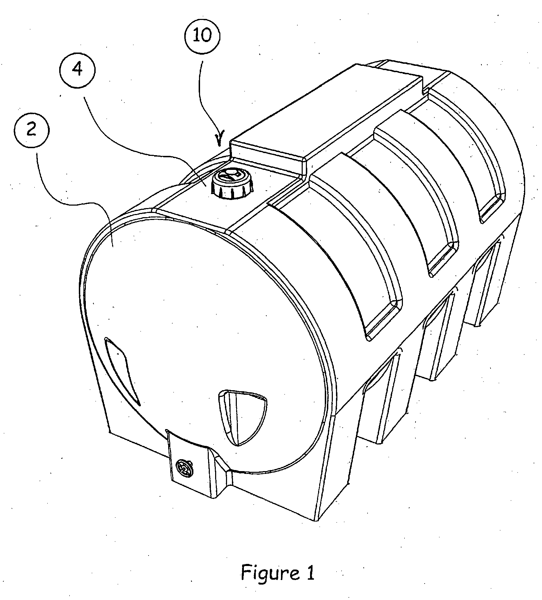

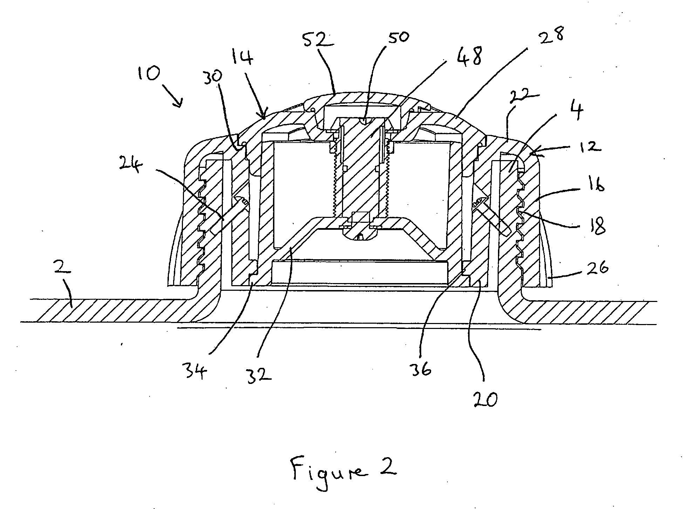

Figures 1 and 2 show a typical oil storage tank 2 formed from polyethylene moulded to define a hollow tank of a suitable volume, typically between 750 and 2000 litres, for storing heating oil, typically for use in a boiler of a central heating system. The tank 2 has a filler neck 4 of circular transverse cross section defining a tubular filler opening for filling the tank with oil.

A locking closure 10 may be fitted to the filler neck 4 to enable the filler opening to be securely sealed to prevent theft or tampering with the contents of the tank 2 and allowing access to filler opening when it required to fill the tank.

The locking closure 10 comprises a fitting boss 12 adapted to be secured to the filler neck 4 of the tank 2 and a filler cap 14 in the form of a plug insertable into the fitting boss 12 to close the filler opening. The filler cap 14 is provided with a locking mechanism for locking the filler cap 14 in place within the fitting boss 12 to obscure and seal the filler neck 4 of the tank 2 to prevent unauthorised access to the filler opening of the tank.

In the example shown in Figures 1 to 10, which does not fall within the scope of the present invention, the fitting boss 12 comprises an outer sleeve 16 having an internal thread 18 for engaging a corresponding external thread on the filler neck 4 of the tank or on an adaptor fitted to the filler neck 4, as will be described below in more detail. The fitting boss 12 also comprises an inner sleeve 20 dimensioned to fit within the filler neck 4 of the tank 2, the inner and outer sleeves 18,20 being connected by an upper region 22 of the fitting boss 12.

Downwardly angled apertures are formed through the inner sleeve 20 for the insertion of threaded fasteners 24, such as screws, to enable the fitting boss 12 to be secured to the filler neck 4 of the tank 2 by inserting said threaded fasteners 24 through said apertures in the inner sleeve 20 until they engage the filler neck 4 of the tank.

The fitting boss 12 is provided with axially extending ribs 26 formed on an outer surface of the outer sleeve 16 to enable the fitting boss 12 to be screwed onto the filler neck 4 of the tank 2 before the insertion of said threaded fasteners to secure the fitting boss 12 onto the filler neck 4 of the tank.

The filler cap 14 of the locking closure 10 comprises an upper part 28, adapted to engage a seat 30 within the upper region 22 of the fitting boss 12 to close the filler opening of the tank 2, and a lower part 32, rotatably coupled with the upper part, the lower part 32 having locking formations 34 adapted to cooperate with cooperating formations 36 on a lower end of the inner sleeve 20 of the fitting boss 12 to prevent removal of the filler cap 14 from the fitting boss 12 when the locking formations 34 of the lower part 32 of the filler cap 14 and in engagement with the cooperating formations 36 of the fitting boss 12, as will be described in more detail below.

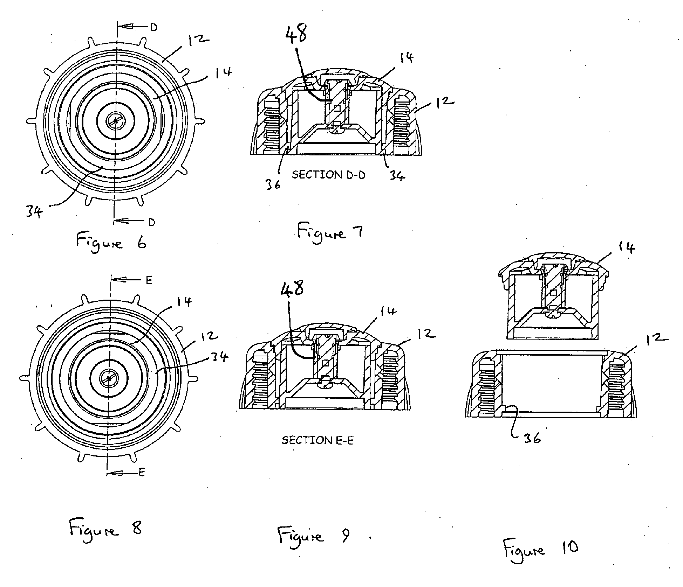

Where the filler neck 4 of the tank 2 is threaded, the fitting boss 12 may simply be screwed onto the filler neck 4 via the thread 18 on the outer sleeve 16 of the fitting boss 12, as described above. Where the filler neck 4 is not threaded, an externally threaded adaptor 38, as shown in Figures 8 and 9, may be attached to the tank 2 around the filler neck 4 onto which the fitting boss 12 may be screwed. The adaptor 38 comprises a tubular member 40 having a threaded outer surface 42 and an annular lower flange 44 at a lower end thereof for securing the adaptor 38 to the upper surface of the tank 2 around the filler neck 4 of the tank 2, via apertures 46 formed in the flange 44.

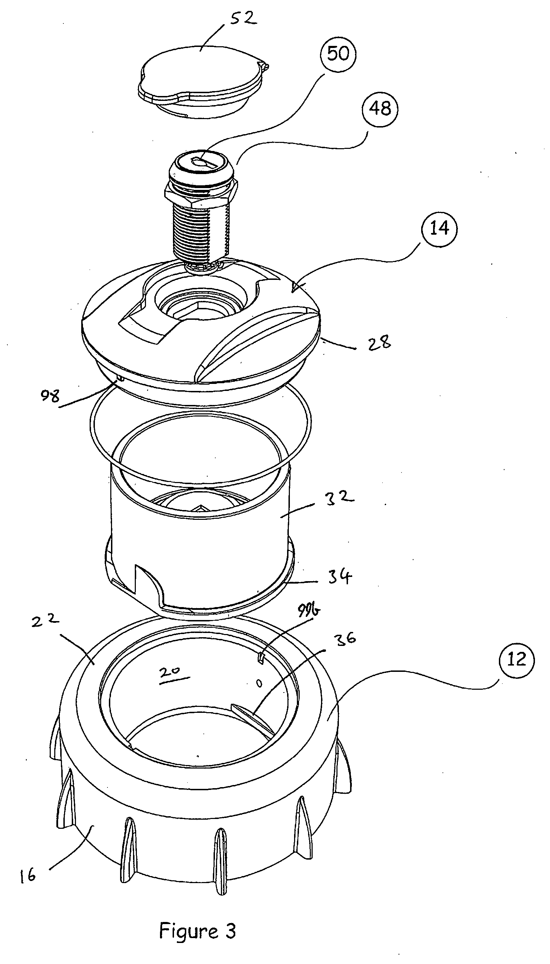

The seat 30 provided in the upper region 22 of the receiving boss 12 is adapted to prevent rotation of the upper part 28 of the filler cap 14 within the fitting boss 12 when the upper part 28 of the filler cap 14 is located in the seat 30. For example, as shown in Figure 3, the mating faces of the filler cap 14 and the seat 30 of the fitting boss 12 may have cooperating projections 98 and recesses 99 to locate the filler cap 14 in the fitting boss 12 in a particular angular orientation with respect to the fitting boss 12 and to prevent rotation of the upper part 28 of the filler cap 14 within the fitting boss 12.

The upper and lower parts 28,32 of the filler cap 14 are coupled to one another by means of a lock barrel 48, arranged coaxially between the upper and lower parts 28,32, such that rotation of the lock barrel 48 by means of a key inserted into the keyhole 50 of the lock barrel 48 causes relative rotation between the upper and lower parts 28,32, causing rotation of the locking formations 34 on the lower part 32 between a first position, wherein said locking formations 34 are circumferentially spaced from said cooperating formations 36 on the inner sleeve 20 of the fitting boss 12 to allow insertion and removal of the filler cap 14 from the fitting boss 12, and a second position, shown in Figure 7, wherein the locking formations 34 of the lower part 32 of the filler cap 14 engage (fit below) the cooperating formations 36 of the inner sleeve 20 of the fitting boss 12 to prevent removal of the filler cap 14 from the fitting boss 12.

As shown in Figures 6 to 10, the locking formations 34 of the lower part 32 of the filler cap 14 and the cooperating formations 36 of the inner sleeve 20 define respective parts of a circular flange or ring. The locking formations 34 of the lower part 32 of the filler cap 14 comprises a radially outwardly extending circular flange having diametrically opposed tangentially extending cut out portions, the cooperating formations 36 of the inner sleeve 20 of the fitting boss 12 comprising inwardly radially extending ridges corresponding to the cut out portions of the locking formations 34 of the lower part of the filler cap 14. The ridges 36 of the inner sleeve 20 are located at a height on the inner sleeve 20 such that the flange 34 of the lower part 32 of the filler cap 14 may slide beneath said ridges 36 when the upper part 28 of the filler cap 14 is engaged in its seat 30 within the upper region 22 of the fitting boss 12 as the locking formations 34 of the filler cap 14 are moved between their first and second positions by rotation of the key in the lock barrel 48.

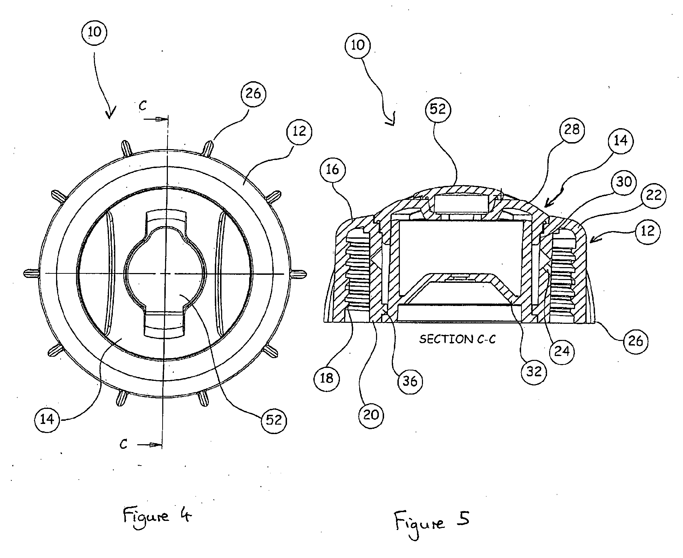

As can be seen from the drawings, the key hole 50 of the lock barrel 48 is recessed within the top of the filler cap 14 and a cover member 52 is provided for protecting the key hole 50 from the elements. The cover member 52 may comprise a removable plug formed from a resilient material, as in the. embodiment shown in Figures 2 and 3, or may be hingedly connected to the top of the filler cap 14 on one side, as in the embodiment shown in Figures 4 to 7.

It is envisaged that alternative locking mechanisms may be utilised for selectively locking the filler cap 14 within the fitting boss 12. For example, radially projecting fingers may be arranged to be moveable between retracted positions, wherein the filler cap 14 can be inserted into and removed from the fitting boss 12, and extended positions, wherein the fingers interact with the fitting boss to prevent removal of the filler cap 14 from the fitting boss 12.

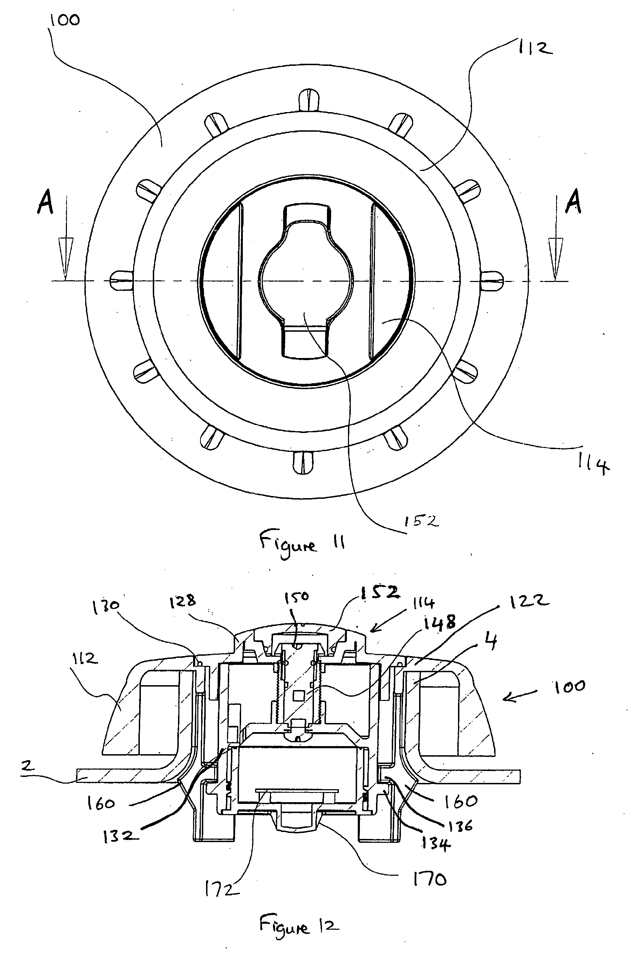

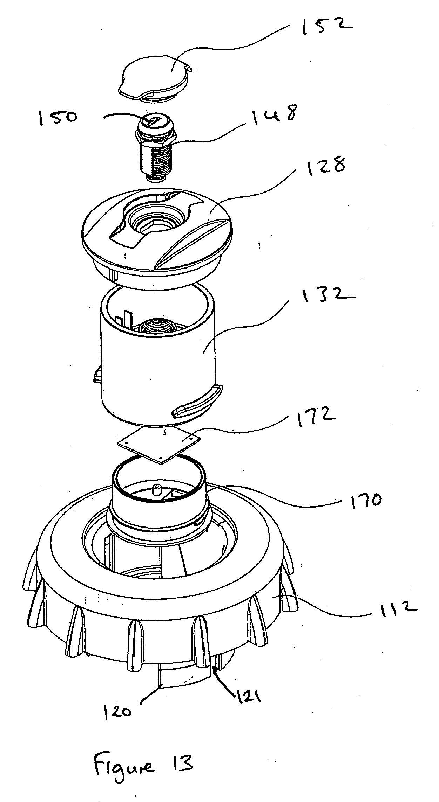

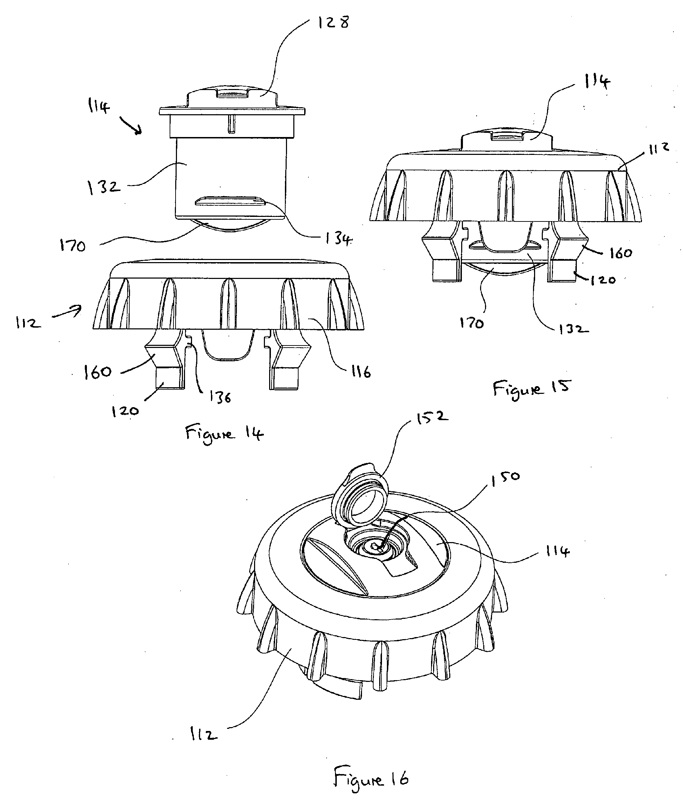

A locking closure 100 in accordance with a preferred embodiment of the present invention is illustrated in Figures 11 to 26.

The locking closure 100 of the preferred embodiment is similar to that of the example shown in Figures 1 to 10, in so far as it comprises a fitting boss 112 adapted to be secured to the filler neck 4 of a tank 2 and a filler cap 114 in the form of a plug insertable into the fitting boss 112 to close the filler opening defined by the filler neck 4.

The filler cap 114 is provided with a locking mechanism for locking the filler cap 114 within the fitting boss 112. The fitting boss 112 of the locking closure 100 of the second embodiment is modified to retain the fitting boss 112, and thus the locking closure, within the filler neck 4 of the tank when the filler cap 112 is in place within the fitting boss 112.

The filler cap 114 of the locking closure 100 comprises an upper part 128, adapted to engage a seat 130 within the upper region 122 of the fitting boss 112 to close the filler opening defined by the neck 4 of the tank 2, and a lower part 132, rotatably coupled with the upper part.

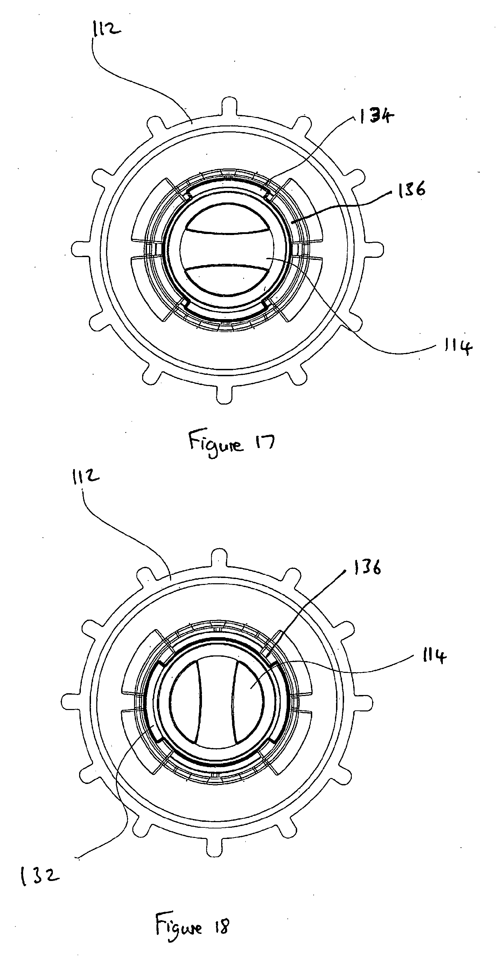

The fitting boss 112 has a tubular outer sleeve 116 adapted to fit over the filler neck 4 of the tank and a split inner sleeve 120 having inwardly facing locking formations 136 adapted to cooperate with cooperating locking formations 134 on the outer sides of the filler cap 114, in the same manner as the locking formations 34,26 of the locking closure 10 of the first example, whereby upper and lower parts 128,132 of the filler cap 114 are coupled to one another by means of a lock barrel 148, arranged coaxially between the upper and lower parts 128,132, such that rotation of the lock barrel 148 by means of a key inserted into the key hole 50 of the lock barrel 148 causes relative rotation between the upper and lower parts 128,132, causing rotation of the locking formations 134 on the lower part 132 between a first position (see Figure 17), wherein said locking formations 134 are circumferentially spaced from said cooperating formations 136 on the inner sleeve 120 of the fitting boss 112 to allow insertion and removal of the filler cap 114 from the fitting boss 112, and a second position (see Figure 18) wherein the locking formations 134 of the lower part 132 of the filler cap 114 engage (fit below) the cooperating formations 136 of the inner sleeve 120 of the fitting boss 112 to prevent removal of the filler cap 114 from the fitting boss 112.

A cover member 152 is provided for protecting the key hole 150 of the lock barrel 148 from the elements.

The outer surfaces of the split inner sleeve 120 of the fitting boss 112 comprises outwardly flared shoulder portions 160 adjacent a lower edge thereof, said shoulder portions 160 extending radially outwardly to engage a lower end of the filler neck 4 of the tank to prevent removal of the fitting boss 112 from the filler neck 4. The shoulder portions 160 are shaped to engage the curved transitional portion of the tank between the tubular sides of the filler opening 4 and the surrounding body of the tank 2, as shown in Figure 12.

Axially extending slots 121 divide the inner sleeve 120 into separate segments and allow the segments of the inner sleeve 120 to be displaced inwardly to allow the shoulder portions 160 to pass through the filler neck 4 as the fitting boss 112 is fitted to the filler neck 4. Once the inner sleeve 120 of the fitting boss 112 has entered the filler neck 4, the segments of the inner sleeve 120 spring back to cause the shoulder portions 160 to engage said curved transitional portion of the tank to retain the fitting boss 112 on the filler neck 4. Once the filler cap 114 has been inserted into the inner sleeve 120 of the fitting boss 112, inward displacement of the segments of the inner sleeve 120 is prevented, and therefore removal of the locking closure 100 from the filler neck 4 is prevented by means of the shoulder portions 160 of the fitting boss 112.

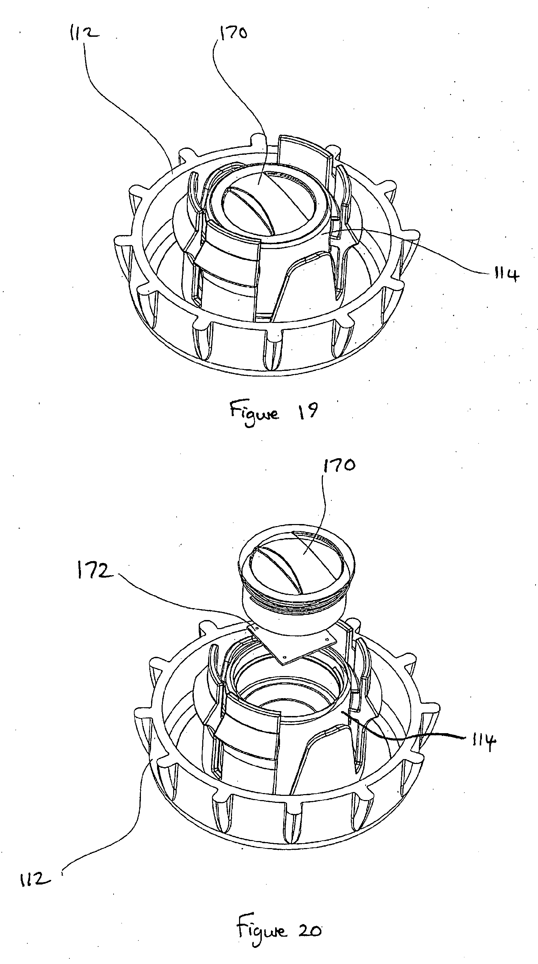

An electronics enclosure 170, in the form of a plug like hollow member, is mounted within the lower part 132 of the filler cap 114, within which a circuit board 172 is mounted. The electronics enclosure 170 may be threadedly received within the filler cap 14 so that it can be removed by unscrewing to gain access to the electronic components therein, for example for maintenance or to permit batteries to be replaced. As can be seen from Figures 19 and 20, the lower face of the electronics enclosure 170 is shaped to provide grip to enable the electronics enclosure 170 to be rotated and unscrewed from the filler cap 114 to gain access to the printed circuit board 172 and other electronic components therein.

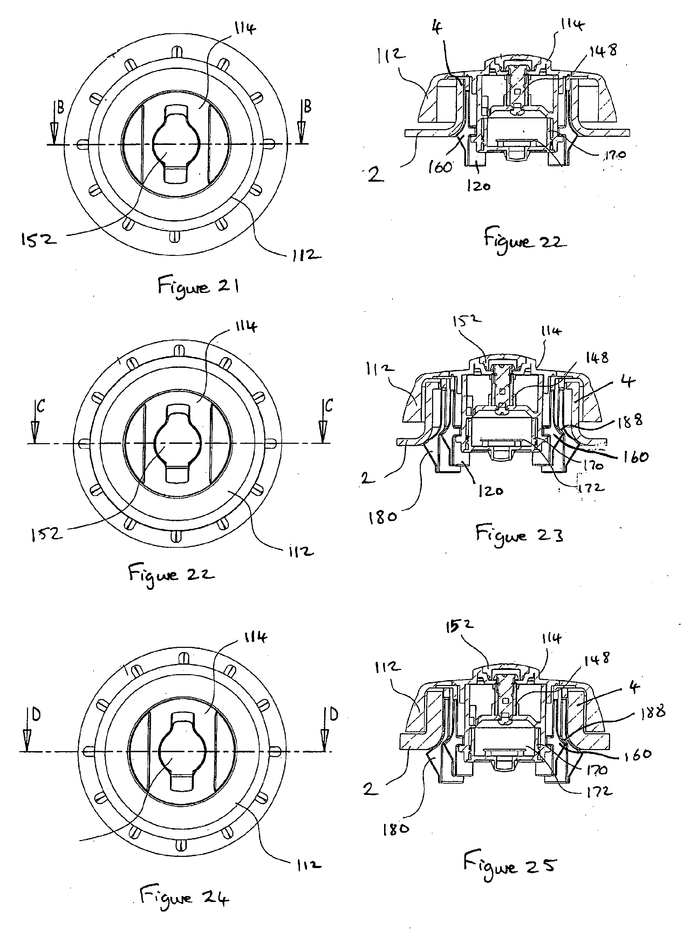

The locking closure 100 may be used with tanks 2 having filler necks 4 having a range of different diameters and/or wall thicknesses by the use of one or more adaptors 180, as shown in Figures 21 to 26.

Figures 21 and 22 show the locking closure fitted to a filler neck 4 of a tank 2 having a first diameter, for example a 105mm outside diameter, and a first wall thickness. The inner sleeve 120 of the fitting boss 112 is dimensioned to be a sliding fit within the filler neck 4. As discussed above, the fitting boss 112 is retained within the filler neck 4 by means of shoulder portions 160 provided on the outer sides of the inner sleeve 120 and dimensioned to engage said curved transitional portion of the tank 2 between the filler neck 3 and the body of the tank 2.

Where it is required to attach the locking closure 100 to a tank 2 having a filler neck 4 of a larger diameter and/or a reduced wall thickness, an adaptor 180 may be provided to be fitted within the filler neck 4 to define a sleeve within the filler neck 4 within which the inner sleeve 120 of the fitting boss can be received.

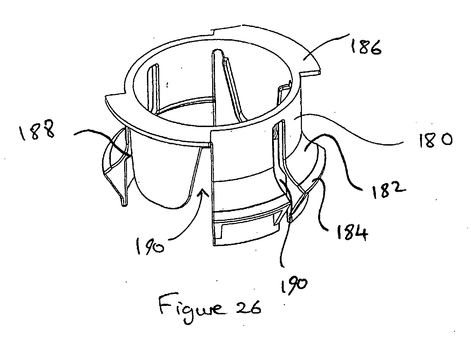

As shown in Figure 26, the adaptor 180 comprises a sleeve like member having shoulder portions 182 on the outer faces thereof for engaging engage the curved transitional portion of the tank 2 between the tubular sides of the filler opening 4 and the surrounding body of the tank 2, as shown in Figures 23 and 25. The shoulder portions 182 may be shaped to define a number of surface portions adapted to engage such transitional portion of different sized filler necks 4. In the embodiment shown, an outer lip portion 184 of the shoulder portions 182 is dimensioned to engage the transitional portion of a filler neck 4 having a first inner diameter while and inner region of the shoulder portions 182 may be shaped to engage the transitional portion of a filler neck 4 having a second, narrower inner diameter. Outwardly extending lip portions 186 are provided extending outwardly from an upper edge of the adaptor portion to engage an upper lip of the filler neck 4 to prevent the adaptor 180 from falling into the tank 2. An inner wall of the adaptor is shaped to engage the shoulder portions 160 of the fitting boss 112 to retain the fitting boss 112 of the locking closure 100 within the adaptor 180 thereby. As with the inner sleeve 120 of the fitting boss 112, the side wall of the adaptor 180 is provided with axial slots or gaps 190 allowing the shoulder portions 182 to be displaced inwardly to enable the adaptor 180 to be inserted into the filler neck 4 of a tank 2.

The outer sleeve 116 of the fitting boss 112 has an internal diameter selected to fit over the widest filler neck 4 to which the locking closure 100 is intended to be fitted.

The invention is not limited to the embodiment(s) described herein but can be amended or modified without departing from the scope of the present invention as defined by the appended claims.

## Claims

1. A locking closure (100) for closing the filler opening (4) of an oil storage tank (2), said locking closure (100) comprises an outer part defining a fitting boss (112) for securing to a filler opening (4) of an oil storage tank (2) and an inner part (114) insertable into the fitting boss (112) in the manner of a plug to close the filler opening (4), the inner part (114) having a locking mechanism operable to secure the inner part (114) in the fitting boss (112), wherein the fitting boss (112) of the locking closure (100) comprises an outer sleeve (116) adapted to be fitted over the filler opening of the oil tank and a coaxial inner sleeve (120) adapted to be inserted into the filler opening (4) of the oil tank (2), said inner part (114) of the locking closure (100) being received within said inner sleeve (120) of the fitting boss (112), **characterised in that** an outer surface of the inner sleeve (120) of the fitting boss (112) is provided with at least one outwardly projecting shoulder or flange (160) adjacent a lower edge thereof to engage a lower end of the filler opening (4) for resisting removal of the inner sleeve (120) from the filler opening to retain the fitting boss (112) in the filler opening and wherein the inner sleeve (120) is provided with one or more axially extending slots or openings (121) to permit the inner sleeve (120) to be displaced inwardly to allow said shoulder or flange (160) to pass through the filler opening of the tank.

2. A locking closure as claimed in claim 1, wherein the outer sleeve (116) of the fitting boss (112) is provided with an internal thread adapted to engage a cooperating external thread on the filler opening.

3. A locking closure as claimed in any preceding claim, wherein an adaptor (180) is provided comprising a tubular sleeve adapted to be securable to the filler opening (4), said locking closure (100) being securable to the adaptor (180), said adaptor (180) being receivable within the filler neck (4) of the tank (2), the fitting boss (112) of the locking closure being securable to the adaptor (180) such that the adaptor (180) defines a sleeve of spacer between the filler neck (4) and the fitting boss (112) of the locking closure (100) and wherein the adaptor (180) is adapted to be retained within the filler (4) opening when located therein by means of outwardly projections shoulder portions (182) provided on outer faces of the adaptor (180), an inner wall of the adaptor (180) being shaped to engage shoulder portions (160) of the fitting boss (112) to retain the fitting boss (112) of the locking closure (100) within the adaptor (180), the side wall of the adaptor (180) being provided with axial slots or gaps (190) allowing the shoulder portions (182) to be displaced inwardly to enable the adaptor (180) to be inserted into the filler neck (4) of a tank (2).

4. A locking closure as claimed in any preceding claim, wherein the locking mechanism comprises one or more projections or lugs (134) provided on the inner part (114) of the locking closure (100), said one or more projections or lugs (134) being moveable between a first position, wherein the inner part (114) is free to be moved into and out of the fitting boss (112), and a second position, wherein said one or more projections or lugs (134) engage cooperating features (136) of the fitting boss (112) to prevent removal of the inner part (114) from the fitting boss (112).

5. A locking closure as claimed in claim 4, wherein said one or more projections or lugs (134) are moveable between their first and second positions by rotation of a lock barrel (148) mounted in the inner part (114) of the locking closure (100), said lock barrel (148) being rotatable by means of a key.

6. A locking closure as claimed in claim 4 or claim 5, wherein said one or more projections or lugs (134) are provided on a first component (132) of the inner part (134), said first component (132) being coupled to a second component(128) of the inner part (114) for relative rotation with respect to the second component (128), such that rotation of the first component (132) with respect to the second component (128) moves said one or more projections or lugs (134) between their first and second positions.

7. A locking closure as claimed in claim 6, wherein said second component (128) of the inner part engages the fitting boss (112) of the locking closure (100) when the inner part (114) is inserted into the fitting boss (112) to prevent rotation of said second component (128) of the inner part (114) with respect to the fitting boss (112), said one or more projections or lugs (134) of the first component (132) of the inner part (114) moving into and out of engagement with cooperating projections, recesses or lugs (136) of the fitting boss (112) as the first component (132) of the inner part (114) is rotated with respect to the second component (128).

8. A locking closure as claimed in claim 7, wherein said one or more projections or lugs (134) on the first component (132) of the inner part (114) comprise at least one radially extending lip arranged to be received behind or below a respective inwardly extending projection or ledge (136) on the fitting boss (112) to retain the inner part (114) within the fitting boss (114) when said at least one radially extending lip (134) of the first component (114) is in its second position, said at least one radially extending lip (134) being circumferentially spaced from said respective inwardly extending projection or ledge (136) when in its first position to permit the inner part (114) to be removed from the fitting boss (112).

## Patentansprüche

1. Sicherungsverschluss (100) zum Verschließen der Einfüllöffnung (4) eines Öllagertanks (2), wobei der genannte Sicherungsverschluss (100) einen äußeren Teil, der eine Passnabe (112) zum Befestigen an einer Einfüllöffnung (4) eines Öllagertanks (2) definiert, und einen inneren Teil (114) umfasst, der in die Passnabe (112) nach Art eines Stopfens eingeführt werden kann, um die Einfüllöffnung (4) zu verschließen, wobei der innere Teil (114) einen Sicherungsmechanismus aufweist, um den inneren Teil (114) in der Passnabe (112) zu befestigen, wobei die Passnabe (112) des Sicherungsverschlusses (100) eine äußere Hülse (116), die zum Setzen über die Einfüllöffnung des Öltanks ausgelegt ist, und eine koaxiale innere Hülse (120) umfasst, die zum Einführen in die Einfüllöffnung (4) des Öltanks (2) ausgelegt ist, wobei der genannte innere Teil (114) des Sicherungsverschlusses (100) in der genannten inneren Hülse (120) der Passnabe (112) aufgenommen wird, **dadurch gekennzeichnet, dass** eine Außenfläche der inneren Hülse (120) der Passnabe (112) mit wenigstens einem nach außen vorstehenden Ansatz oder Flansch (160) neben einem unteren Rand davon versehen ist, um in ein unteres Ende der Einfüllöffnung (4) einzugreifen, um dem Entfernen der inneren Hülse (120) aus der Einfüllöffnung zu widerstehen, um die Passnabe (112) in der Einfüllöffnung zu halten, und wobei die innere Hülse (120) mit einer/m oder mehreren axial verlaufenden Schlitzen oder Öffnungen (121) versehen ist, um ein Verschieben der inneren Hülse (120) nach innen zu gestatten, so dass der genannte Ansatz oder Flansch (160) durch die Einfüllöffnung des Tanks passieren kann.

2. Sicherungsverschluss nach Anspruch 1, wobei die äußere Hülse (116) der Passnabe (112) mit einem Innengewinde zum Eingreifen in ein zusammenwirkendes Außengewinde an der Einfüllöffnung versehen ist.

3. Sicherungsverschluss nach einem vorherigen Anspruch, wobei ein Adapter (180) vorgesehen ist, der eine tubuläre Hülse umfasst, die an der Einfüllöffnung (4) befestigt werden kann, wobei der genannte Sicherungsverschluss (100) an dem Adapter (180) befestigt werden kann, wobei der genannte Adapter (180) im Einfüllstutzen (4) des Tanks (2) aufgenommen werden kann, wobei die Passnabe (112) des Sicherungsverschlusses am Adapter (180) befestigt werden kann, so dass der Adapter (180) eine Abstandshülse zwischen dem Einfüllstutzen (4) und der Passnabe (112) des Sicherungsverschlusses (100) definiert, und wobei der Adapter (180) zum Halten in der Einfüllöffnung (4) ausgelegt ist, wenn er sich darin befindet, mittels nach außen vorstehender Ansatzabschnitte (182), die an Außenflächen des Adapters (180) vorgesehen sind, wobei eine Innenwand des Adapters (180) so gestaltet ist, dass sie in Ansatzabschnitte (160) der Passnabe (112) eingreift, um die Passnabe (112) des Sicherungsverschlusses (100) in dem Adapter (180) zu halten, wobei die Seitenwand des Adapters (180) mit axialen Schlitzen oder Lücken (190) versehen ist, die eine einwärtige Verschiebung der Ansatzabschnitte (182) zulassen, damit der Adapter (180) in den Einfüllstutzen (4) eines Tanks (2) eingeführt werden kann.

4. Sicherungsverschluss nach einem vorherigen Anspruch, wobei der Sicherungsmechanismus einen oder mehrere Vorsprünge oder Nasen (134) aufweist, die am Innenteil (114) des Sicherungsverschlusses (100) vorgesehen sind, wobei die genannten ein oder mehreren Vorsprünge oder Nasen (134) zwischen einer ersten Position, in der der Innenteil (114) frei in die und aus der Passnabe (112) bewegt werden kann, und einer zweiten Position beweglich ist, in der die genannten ein oder mehreren Vorsprünge oder Nasen (134) in zusammenwirkende Merkmale (136) der Passnabe (112) eingreifen, um ein Entfernen des inneren Teils (114) von der Passnabe (112) zu verhindern.

5. Sicherungsverschluss nach Anspruch 4, wobei die genannten ein oder mehreren Vorsprünge oder Nasen (134) zwischen ihrer ersten und zweiten Position durch Drehen eines Zylinderschlosses (148) beweglich sind, das im inneren Teil (114) des Sicherungsverschlusses (100) montiert ist, wobei das genannte Zylinderschloss (148) mittels eines Schlüssels gedreht werden kann.

6. Sicherungsverschluss nach Anspruch 4 oder Anspruch 5, wobei die genannten ein oder mehreren Vorsprünge oder Nasen (134) an einer ersten Komponente (132) des inneren Teils (134) vorgesehen sind, wobei die genannte erste Komponente (132) mit einer zweiten Komponente (128) des inneren Teils (114) für eine relative Drehung mit Bezug auf die zweite Komponente (128) gekoppelt ist, so dass durch Drehen der ersten Komponente (132) mit Bezug auf die zweite Komponente (128) die genannten ein oder mehreren Vorsprünge oder Nasen (134) zwischen ihrer ersten und zweiten Position bewegt werden.

7. Sicherungsverschluss nach Anspruch 6, wobei die genannte zweite Komponente (128) des inneren Teils in die Passnabe (112) des Sicherungsverschlusses (100) eingreift, wenn der innere Teil (114) in die Passnabe (112) eingefügt wird, um ein Drehen der genannten zweiten Komponente (128) des inneren Teils (114) mit Bezug auf die Passnabe (112) zu verhindern, wobei sich die genannten ein oder mehreren Vorsprünge oder Nasen (134) der ersten Komponente (132) des inneren Teils (114) in den und aus dem Eingriff mit zusammenwirkenden Vorsprüngen, Aussparungen oder Nasen (136) der Passnabe (112) bewegen, während die erste Komponente (132) des inneren Teils (114) mit Bezug auf die zweite Komponente (128) gedreht wird.

8. Sicherungsverschluss nach Anspruch 7, wobei die genannten ein oder mehreren Vorsprünge oder Nasen (134) an der ersten Komponente (132) des inneren Teils (114) wenigstens eine radial verlaufende Lippe umfassen, die zur Aufnahme hinter oder unter einem/r jeweils einwärts verlaufenden Vorsprung oder Rippe (136) an der Passnabe (112) angeordnet ist, um den inneren Teil (114) in der Passnabe (114) zu halten, wenn die genannte wenigstens eine radial verlaufende Lippe (134) der ersten Komponente (114) in ihrer zweiten Position ist, wobei die genannte wenigstens eine radial verlaufende Lippe (134) umfangsmäßig von dem/der jeweiligen einwärts verlaufenden Vorsprung oder Rippe (136) beabstandet ist, wenn sie in ihrer ersten Position ist, um ein Entfernen des inneren Teils (114) von der Passnabe (112) zuzulassen.

## Revendications

1. Organe de fermeture à verrouillage (100) destiné à fermer l'ouverture de remplissage (4) d'une cuve de stockage de pétrole (2), ledit organe de fermeture à verrouillage (100) comprenant une partie externe définissant un bossage de montage (112) destiné à être fixé à une ouverture de remplissage (4) d'une cuve de stockage de pétrole (2), et une partie interne (114) pouvant être insérée dans le bossage de montage (112) à la manière d'un bouchon pour fermer l'ouverture de remplissage (4), la partie interne (114) ayant un mécanisme de verrouillage actionnable pour fixer la partie interne (114) dans le bossage de montage (112), dans lequel le bossage de montage (112) de l'organe de fermeture à verrouillage (100) comprend un manchon externe (116) adapté pour être monté par-dessus l'ouverture de remplissage de la cuve de pétrole et un manchon interne coaxial (120) adapté pour être inséré dans l'ouverture de remplissage (4) de la cuve de pétrole (2), ladite partie interne (114) de l'organe de fermeture à verrouillage (100) étant reçue à l'intérieur dudit manchon interne (120) du bossage de montage (112), **caractérisé en ce qu'**une surface externe du manchon interne (120) du bossage de montage (112) est dotée d'au moins d'un épaulement ou bride saillant vers l'extérieur (160) adjacent à un bord inférieur de celui-ci pour se mettre en prise avec une extrémité inférieure de l'ouverture de remplissage (4) afin de résister au retrait du manchon interne (120) d'avec l'ouverture de remplissage pour retenir le bossage de montage (112) dans l'ouverture de remplissage et dans lequel le manchon interne (120) est doté d'une ou plusieurs fentes ou ouvertures s'étendant axialement (121) pour permettre de déplacer le manchon interne (120) vers l'intérieur afin de pouvoir passer lesdits épaulements ou brides (160) à travers l'ouverture de remplissage de la cuve.

2. Organe de fermeture à verrouillage selon la revendication 1, dans lequel le manchon externe (116) du bossage de montage (112) est doté d'un filet interne adapté pour se mettre en prise avec un filet externe coopérant sur l'ouverture de remplissage.

3. Organe de fermeture à verrouillage selon l'une quelconque des revendications précédentes, dans lequel est fourni un adaptateur (180) comprenant un manchon tubulaire adapté pour pouvoir être fixé à l'ouverture de remplissage (4), ledit organe de fermeture à verrouillage (100) pouvant être fixé à l'adaptateur (180), ledit adaptateur (180) pouvant être reçu à l'intérieur du col de remplissage (4) de la cuve (2), le bossage de montage (112) de l'organe de fermeture à verrouillage pouvant être fixé à l'adaptateur (180) de telle sorte que l'adaptateur (180) définisse un manchon d'entretoise entre le col de remplissage (4) et le bossage de montage (112) de l'organe de fermeture à verrouillage (100) et dans lequel l'adaptateur (180) est adapté pour être retenu à l'intérieur de l'ouverture de remplissage (4) quand il est situé à l'intérieur de celle-ci au moyen de parties d'épaulement saillant vers l'extérieur (182) fournies sur des faces externes de l'adaptateur (180), une paroi interne de l'adaptateur (180) étant conformée pour se mettre en prise avec des parties d'épaulement (160) du bossage de montage (112) pour retenir le bossage de montage (112) de l'organe de fermeture à verrouillage (100) à l'intérieur de l'adaptateur (180), la paroi latérale de l'adaptateur (180) étant doté de fentes ou espaces axiaux (190) permettant de déplacer les parties d'épaulement (182) vers l'intérieur pour permettre l'insertion de l'adaptateur (180) dans le col de remplissage (4) d'une cuve (2).

4. Organe de fermeture à verrouillage selon l'une quelconque des revendications précédentes, dans lequel le mécanisme de verrouillage comprend une ou plusieurs saillies ou oreilles (134) fournies sur la partie interne (114) de l'organe de fermeture à verrouillage (100), lesdites une ou plusieurs saillies ou oreilles (134) étant déplaçables entre une première position, à laquelle la partie interne (114) peut entrer et sortir librement du bossage de montage (112), et une seconde position, à laquelle lesdites une ou plusieurs saillies ou oreilles (134) se mettent en prise avec des caractéristiques coopérantes (136) du bossage de montage (112) pour empêcher le retrait de la partie interne (114) d'avec le bossage de montage (112).

5. Organe de fermeture à verrouillage selon la revendication 4, dans lequel lesdites une ou plusieurs saillies ou oreilles (134) sont déplaçables entre leurs première et seconde positions par rotation d'un barillet de serrure (148) monté dans la partie interne (114) de l'organe de fermeture à verrouillage (100), ledit barillet de serrure (148) pouvant être tourné au moyen d'une clé.

6. Organe de fermeture avec verrouillage selon la revendication 4 ou la revendication 5, dans lequel lesdites une ou plusieurs saillies ou oreilles (134) sont fournies sur un premier composant (132) de la partie interne (134), ledit premier composant (132) étant couplé à un second composant (128) de la partie interne (114) en vue de tourner relativement au second composant (128), de telle sorte que la rotation du premier composant (132) relativement au second composant (128) déplace lesdites une ou plusieurs saillies ou oreilles (134) entre leurs première et seconde positions.

7. Organe de fermeture à verrouillage selon la revendication 6, dans lequel ledit second composant (128) de la partie interne se met en prise avec le bossage de montage (112) de l'organe de fermeture à verrouillage (100) quand la partie interne (114) est inséré dans le bossage de montage (112) pour empêcher la rotation dudit second composant (128) de la partie interne (114) relativement au bossage de montage (112), lesdites une ou plusieurs saillies ou oreilles (134) du premier composant (132) de la partie interne (114) se mettant en prise avec des saillies, renfoncements ou oreilles (136) coopérants du bossage de montage (112) ou s'en désengageant, au fur et à mesure que le premier composant (132) de la partie interne (114) est tourné relativement au second composant (128).

8. Organe de fermeture à verrouillage selon la revendication 7, dans lequel lesdites une ou plusieurs saillies ou oreilles (134) sur le premier composant (132) de la partie interne (114) comprennent au moins une lèvre s'étendant radialement agencée pour être reçue derrière ou en dessous d'une saillie ou d'un rebord s'étendant vers l'intérieur (136) respectif sur le bossage de montage (112) pour retenir la partie interne (114) à l'intérieur du bossage de montage (114) quand ladite au moins une lèvre s'étendant radialement (134) du premier composant (114) se trouve à sa seconde position, ladite au moins une lèvre s'étendant radialement (134) étant espacée circonférentiellement de ladite saillie ou dudit rebord s'étendant vers l'intérieur (136) respectif quand elle se trouve à sa première position pour permettre le retrait de la partie interne (114) d'avec le bossage de montage (112).
